(19) Europäisches Patentamt
European Patent Office
Office européen des brevets

(11) EP 1 624 553 B1

(12) **EUROPEAN PATENT SPECIFICATION**

(45) Date of publication and mention of the grant of the patent:
**08.02.2012 Bulletin 2012/06**

(51) Int Cl.:
***H02K 21/16*** *(2006.01)*

(21) Application number: **05021517.7**

(22) Date of filing: **07.09.1998**

(54) **Permanent magnet synchronous motor**

Permanentmagnetsynchronmotor

Moteur synchrone à aimants permanents

(84) Designated Contracting States:
**DE FR GB**

(30) Priority: **08.09.1997 JP 24293997**
**08.09.1997 JP 24294097**

(43) Date of publication of application:
**08.02.2006 Bulletin 2006/06**

(62) Document number(s) of the earlier application(s) in accordance with Art. 76 EPC:
**98941739.9 / 1 014 541**

(73) Proprietor: **Panasonic Corporation**
**Kadoma-shi**
**Osaka 571-8501 (JP)**

(72) Inventors:
- **Murakami, Hiroshi**
  **Suita-shi**
  **Osaka 565-0861 (JP)**
- **Honda, Yukio**
  **Katano-shi**
  **Osaka 576-0052 (JP)**
- **Yokote, Shizuka**
  **Osaka-shi**
  **Osaka 533-0012 (JP)**
- **Asano, Yoshinari**
  **Shiga 525-0023 (JP)**
- **Wada, Yukitoshi**
  **Katano-shi**
  **Osaka 576-0052 (JP)**
- **Hirose, Hideo**
  **Hirakata-shi**
  **Osaka 573-0076 (JP)**
- **Matsushita, Yasuaki**
  **Kyotanabe**
  **Kyoto 610-0341 (JP)**

(74) Representative: **Grünecker, Kinkeldey, Stockmair & Schwanhäusser**
**Anwaltssozietät**
**Leopoldstrasse 4**
**80802 München (DE)**

(56) References cited:
**EP-A- 0 695 018**
**DE-A1- 3 922 123**
**JP-A- 6 217 478**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 624 553 B1

## Description

### Technical Field

The present invention relates to permanent magnet synchronous motors, and particularly relates to a permanent magnet synchronous motor having a stator with concentrated windings.

### Background Art

A high power permanent magnet synchronous motor, in general, uses numbers of teeth of a stator and employs a distributed winding method so that the composite magnetomotive force of this motor can form approximately a sine wave. Permanent magnets of the rotor of this synchronous motor employs magnets made of rare-earth featuring a high density of magnetic flux as well as large withstanding force against demagnetization. Further a sensor detects rotational phase of the rotor so that current phase can be controlled responsive to a rotor position.

However, the distributed winding method requires complicated winding processes, and this lowers winding-efficiency. The rare earth magnet and the sensor detecting the rotational phase are expensive, and these elements boost the cost of this motor.

An inexpensive permanent magnet synchronous motor is thus developed as shown in Fig. 17(a) in order to overcome the problems discussed above. Stator 21 is formed by cores 22 (refer to Fig. 17(b)) divided corresponding to respective teeth. Teeth 26 of divided cores 22 are wound with insulating paper 28, and coils are wound on top of that, thereby forming concentrated winding coils 23. Divided cores 22 with the concentrated windings are incorporated into a ring and fixed by welding, caulking or laser-beam-welding to form the stator having the concentrated windings. Permanent magnets 25 of rotor 24 are made of inexpensive ferrite magnet. Regarding the current-phase control, a zero-cross point of an inductive voltage-produced by a neutral coil which allows no driving current to run through-is detected so that 120° excitation can be executed by rectangular waveforms.

In this permanent magnet synchronous motor, 3n (n = a natural number) pieces of teeth of stator 21 are arranged with equal intervals and the teeth are coupled each other to form three phases through "Y" letter connecting method. Permanent magnets with 2n (n = a natural number) poles are arranged to face stator 21. As such, it is preferable to prepare 2n poles of permanent magnets for 3n pieces of teeth in the permanent magnet synchronous motor.

In the example shown in Fig. 17, a number of poles of rotor 24 is 8 poles (2n, n = 4), a number of stator teeth is 12 (3n, n = 4). Respective teeth are wound with coils u1, v1, w1, u2, .....v4, w4 sequentially Each coil is connected in series as shown in Fig. 18(a) or in parallel as in Fig. 18(b) to form phases U, V and W.

Meanwhile, in an ordinary permanent magnet synchronous motor, the following relation is established so that leakage flux between each tooth can be reduced: La > approx. 2 Lg, (refer to Fig. 19)
where

La is a clearance between teeth 26 and 26, and
Lg is an air gap between stator 21 and rotor 24.

Permanent magnets 25 have even thickness from an end to the other end in a circumference direction, and magnets 25 are arranged so that each end thereof faces with each other adjacently. However, if this structure is applied to the inexpensive permanent magnet synchronous motor as discussed above, the permanent magnets encounter local demagnetization due to the following reason, whereby a desirable output cannot be produced by the motor.

The reason is this: Since the motor employs the concentrated winding method, a tooth bears a different pole from that of its adjacent tooth, thereby increasing inductance. This situation allows the rotor to be subject to demagnetization. In particular, when the motor is in a sensor-less operation, the permanent magnets of the rotor tend to be demagnetized at starting or at out-of-sync condition. In other words, as shown in Fig. 20, stator coil 23 produces a pole counteracting a pole of permanent magnet 25 of rotor 24, and parts of magnetic field produced by coil 23 invade into permanent magnets 25 as demagnetizing magnetic field 27. When permanent magnets 25 are made of ferrite magnet, demagnetizing magnetic field 27 renders magnets 25 into break down condition. As a result, magnets 25 are demagnetized.

Numbers of motors with concentrated windings have been available in the market; however, a clearance between teeth is so narrow that the permanent magnets are subject to demagnetization when the polarities of adjacent teeth are opposite with each other. When the permanent magnet made of ferrite having small coercive force is used, the withstanding force against demagnetization becomes poor. When the motor is in the sensor-less operation in particular, reverse magnetic field is provably applied to the permanent magnets at staring or out-of-sync condition, thereby demagnetizing the permanent magnets with ease.

JP 06 217 478 describes a permanent magnet type motor whose aim is to suppress cogging torque by arching the inner face of a permanent magnet, setting the ratio of thickness in the radial direction between the pole border part and the pole centre part of the permanent magnet within a specific range, and curving the outer face of the permanent magnet specifically.

EP 0 695 018 discloses a synchronous motor has magnetic slabs positioned radially in azimuth in the motor rotor which is circular in shape. The motor stator has a number of cut-away sections to hold the coil windings. There is a magnetic gap between the rotor and stator. The magnets create a magnetic path cross the magnetic gap, which is closed by a path in the inner rotor section. The reluctance path produces the required 90 degree phase advance without demagnetising the magnets.

The present invention addresses the problems discussed above, and aims to provide a permanent magnet synchronous motor, in which the concentrated winding method is employed and yet the withstanding force of the permanent magnets against demagnetization is enhanced. In accordance with the present invention, the foregoing problems are solved as defined in claim 1. Preferred embodiments are defined in the dependent claims. The embodiments 1 to 3 (Figs. 1 to 5) and the embodiments 5 to 8 (Figs. 8 to 15) are used for background explanation to facilitate the understanding of the invention. The claims now on file form the subject matter of embodiment 4 (Figs. 6 to 7).

**Brief Descriptions of Drawings**

Fig. 1(a) is a cross section of a permanent magnet synchronous motor in accordance with a first example, and Fig. 1(b) is an enlarged view of an important part of the motor.
Fig. 2 is a graph illustrating a relation between the ratio of a slit clearance vs. an air-gap between stator and rotor and a demagnetization rate.
Fig. 3 is an enlarged view of an important part of a permanent magnet synchronous motor in accordance with a second example.
Fig. 4 is a graph concerning the second example and illustrating a relation between a ratio of a depth of a tooth edge vs. an air gap between stator and rotor and a demagnetization rate, and a relation between the same ratio and a torque rate.
Fig. 5 is an enlarged view of an important part of a permanent magnet synchronous motor in accordance with a third example .
Fig. 6(a) is a cross section of a permanent magnet synchronous motor in accordance with a first exemplary embodiment of the present invention, and Fig. 6(b) is an enlarged view of an important part of the motor.
Fig. 7 illustrates an operation of the first embodiment.
Fig. 8 is a cross section of a permanent magnet synchronous motor in accordance with a fourth example.
Fig. 9 illustrates a permanent magnet synchronous motor in accordance with a fifth example, and Fig. 9(a) through Fig. 9(c) are cross sections of respective modifications, Fig. 9(d) is a cross sectional enlarged view of an important part shown in Fig. 9(a).
Fig. 10 illustrates a permanent magnet synchronous motor in accordance with a sixth example, and Fig. 10(a) through Fig. 10(c) are cross sections of respective modifications, Fig. 10(d) is a cross sectional enlarged view of an important part shown in Fig. 10(a).
Fig. 11 is a cross sectional enlarged view of the modification shown in Fig. 10(c).
Fig. 12 illustrates an operation of the sixth example.
. Fig. 13 is a cross section of a permanent magnet synchronous motor in accordance with a seventh example.
Fig. 14 illustrates an operation of the seventh example.
Fig. 15 illustrates an operation of a modification in the seventh example.
Fig. 16 shows cross sectional views of examples other than the examples discussed above.
Fig. 17 illustrates a construction of a conventional permanent magnet synchronous motor, Fig. 17(a) is a cross section of the motor and Fig. 17(b) is a perspective view of a divided core of the motor.
Fig. 18 illustrates coil-couplings of the conventional motor.
Fig. 19 is a cross sectional enlarged view of an important part of the conventional motor.
Fig. 20 illustrates demagnetization in the conventional motor.
Fig. 21 illustrates a compressor used in an air-conditioner or an electric refrigerator.

Detailed Description of Preferred Embodiment

(Example 1)

The first example is demonstrated hereinafter with reference to Fig. 1 and Fig. 2.

In Fig. 1, stator 1 comprises divided cores 3 in a quantity corresponding to a number of slots. Teeth 4 of respective divided cores 3 are wound with coils (not shown) independently. i.e. the concentrated winding method is employed. Rotor 2 comprises rotor core 5 formed of laminated silicon steel sheet and Permanent magnets 6 made of plurality of ferrite magnets, where magnets 6 are fixedly mounted to the outer wall of rotor core 5. A rotary shaft (not shown) extending through and fixed to the center of rotor core 5 is journaled by a bearing. Hollow cylinder 7 made of stainless steel sheet is fit onto the outer wall of rotor 2, or a reinforcing tape is wound around the outer wall so that necessary strength against centrifugal force is obtained.

The motor shown in the drawing has four pairs of polarity (= n), rotor 2 has eight permanent magnets (= 2n), and stator 1 comprises 12 pieces of divided cores 3 (= 3n). Regarding the current control of the coils wound on stator 1, a zero-cross point of an inductive voltage - produced by a neutral coil which allows no driving current to run through - is detected so that 120° excitation can be executed by rectangular waveforms. As illustrated in Fig. 1 (b), teeth clearance La is set to meet the relation of $0.3\ Lg < La \leqq 2.0\ Lg$, where

La = clearance between teeth 4 and 4,
Lg = air gap 8 between stator 1 and rotor 2.

Preferable values of Lg ranges 0.4 - 0.6 mm, and those of La ranges 0.4-1.2 mm.

In the construction discussed above, teeth clearance La between the adjacent teeth edges is set at not greater than two times of air-gap Lg. Therefore, this structure allows leakage flux to flow toward the adjacent teeth and thus restrains the leakage flux from flowing toward rotor 2. Even if the coil on stator 1 is at a position to counteract the polarity of rotor 2, the polarity of rotor 2 is difficult to be subject to demagnetization. The withstanding force of permanent magnet 6 on rotor 2 against the demagnetization is thus increased.

Fig. 2 illustrates a relation between La/Lg and a demagnetizing rate. In the conventional motor, La/Lg is set at greater than 2, and at that time, the demagnetization rate is greater than 1.5%, and this makes it difficult to produce an output. However, setting La/Lg at not greater than 2.0 lowers the demagnetization rate down to less than 1.5%, thereby obtaining the demagnetization rate practically needed. Since La is set at greater than 0.3 Lg, the leakage flux between teeth 4 and 4 does not grow too much. Further, there is no chance for stator 1 to be assembled with poor accuracy due to errors in mold of divided cores 3, for the errors could cause the teeth edges to interfere with each other.

Permanent magnets 6 made of ferrite magnets are less expensive than rare earth magnet. Indeed magnets 6 are vulnerable to demagnetization, but the withstanding force against demagnetization can be increased as discussed above. Stator 1 is formed of divided cores 3, and then individual divided cores 3 can be wound independently and efficiently before being assembled into stator 1, and this structure dramatically improve the productivity of stator 1. As a result, the cost can be substantially reduced.

(Example 2)

A permanent magnet synchronous motor in accordance with the second example is demonstrated hereinafter with reference to Fig. 3 and Fig. 4. The like elements used in the first example bear the like reference marks, and the descriptions thereof are thus omitted here.

As illustrated in Fig. 3, La and Lb are set to meet the relations of:

$$0.3\ Lg < La \leqq 2.0\ Lg, \text{ and } \quad 2\ Lg < Lb < 5\ Lg,$$

where

La = clearance between teeth 4 and 4,
Lb = depth of edge of tooth 4 of stator 1,
Lg = air gap 8 between stator 1 and rotor 2.

In the construction discussed above, in addition to the arrangements done in the first example, tooth depth Lb is set at greater than two times of air-gap Lg, thereby further restraining the leakage flux from flowing toward rotor 2. As a result, the withstanding force against the demagnetization can be increased. Since Lb is set at less than 5 Lg, the leakage flux shorting between teeth 4 and 4 does not grow too much, and thus the motor output has no chance to lower.

Fig. 4(a) and Fig. 4(b) illustrate the relation between Lb / Lg and demagnetization rate, and the relation between Lb/Lg and torque rate, in both cases La/Lg takes 1 (one). As shown in Fig. 4(a), the demagnetization rate decreases at a greater value of Lb/Lg, and as shown in Fig. 4(b) the torque rate decreases at the greater value of Lb/Lg. Thus Lb/Lg is set at greater than 2 thereby reducing the demagnetization rate, and Lb/Lg is set at less than 5 thereby preventing the torque from lowering.

The depth Lb of edges of teeth 4 of stator 1 is set at a greater value as discussed above, and even this arrangement only can also produce some effect.

(xample 3)

A permanent magnet synchronous motor in accordance with the third example is demonstrated hereinafter with reference to Fig. 5.

In Fig. 5, in addition to the arrangements done in the second example shown in Fig. 3, parts of the edges facing with each other of the adjacent teeth 4 and 4 are cut away on their rim sections facing rotor 2, and the cut-away section is called open space 9. (A clearance between tooth edge 4 and rotor 2 is referred to as Lc.)

Open space 9 can be provided only on the edge of trailing side in the rotating direction of the rotor 2 out of the edges of teeth opposing with each other.

The air gap on the edges of teeth 4 can be enlarged by providing open space 9, and this can restrain the demagnetizing magnetic flux from flowing toward the rotor. As a result, the same effect is obtainable.

At the edge of tooth 4 where the rim side facing the rotor 2 has been cut away, the other side to the rotor 2 is protruded so that the depth of the tooth edge is maintained, and this can restrain the demagnetizing magnetic flux from running toward rotor 2. As a result, the withstanding force against the demagnetization can be further enhanced.

Open space 9 simply provided on the edge of teeth 4 can also produce some effect.

(Exemplary Embodiment 1)

A permanent magnet synchronous motor in accordance with the first exemplary embodiment is demonstrated hereinafter with reference to Fig. 6 and Fig. 7. In the previous embodiments 1 - 3, the shape of teeth 4 of stator 1 is modified, thereby restraining the demagnetizing magnetic flux from flowing toward rotor 2. In the following embodiment, demagnetizing magnetic flux-traveling through rotor 2-is modified so as not to travel through permanent magnets 6, so that withstanding force against demagnetization is increased.

In Fig. 6, open spaces 11 are formed on both edges of respective permanent magnets 6, where the edges on the outer rim side are used for open spaces 11. Each open space 11 is defined as shown in Fig. 6(b): Opening angle "Am" of space 11 with regard to the rotor center is set to meet this relation;

$$(1/10)As < Am < (1/4)As$$

where "As" is an opening angle of tooth 4.

This structure, i.e. providing open spaces 11 on both edges of permanent magnet 6, allows demagnetizing magnetic field 12 to travel through open spaces 11 even if demagnetization magnetic field 12 protruding toward rotor 2 is produced between the edges of adjacent teeth 4. Therefore, demagnetization magnetic field 12 does not demagnetize permanent magnet 6, and the withstanding force against the demagnetization of magnet 6 is thus increased. When "Am" is less than (1 / 10)As, the effect discussed above cannot be produced, and when "Am" is greater than (1/4)As, the motor produces lower output or greater cogging torque.

(Example 4)

A permanent magnet synchronous motor in accordance with the fourth example is demonstrated hereinafter with reference to Fig. 8. In embodiment 4, magnet 6 having the inner wall with an even depth with regard to the arc around the shaft center of rotor 2 is used. In this fourth example, magnet 6 having the inner wall with a flat face 13 is used. This structure increases the depth of center part of magnet 6 in the rim direction, thereby increasing withstanding force at the center of magnet 6 against demagnetization.

(Example 5)

A permanent magnet synchronous motor in accordance with the fifth example is demonstrated hereinafter with reference to Fig. 9. In the previous embodiment 1 and example 4, permanent magnets 6 are mounted on the outer wall of rotor core 5, thereby forming rotor 2. In the following examples including this fifth example, permanent magnets 6 are buried in rotor core 5.

In Figs. 9(a), 9(b) and 9(c), open spaces 11 are formed on both edges of permanent magnet 6, where the edges on the outer rim side are used for spaces 11. This magnet 6 is buried in rotor core 5 along its outer rim. Further, as shown in detail in Fig. 9(d), cut-away sections 14 are recessed into the outer wall of rotor core 5 so that the recessed positions can correspond to respective open spaces 11. Permanent magnets 6 shown in Fig. 9(a) have an even depth with regard to the arcs around the rotor center. Permanent magnets 6 shown in Fig. 9(b) have a flat face 13 on their inner wall facing the radial direction of the rotor, so that each magnet 6 has a greater depth at its center. Fig. 9(c) illustrates rotor 2 having four poles, where each permanent magnet 6 has an inner wall shaping an arc with regard to the rotor center and an outer wall shaping another arc with regard to a center eccentric from the rotor-core-center outwardly in the radial direction. This another arced face 15 is protruded and both end sections of face 15 taper into radial direction, so that both the end sections function as open spaces 11.

In this example, open space 11 or an equivalent section functioning as same as open space 11 is formed on both ends of each permanent magnet 6, so that the same effect is produced as the previous embodiment 1 and example 4 did. Further, since this example adopts interior magnets 6, if the outer wall of rotor core 5 is left as it forms circular, ferromagnetic exists outside the open space 11 or the equivalent section whereby leakage magnetic-flux travels through this ferromagnetic and shorts the magnetic circuit. However, cut-away section 14 is provided in this embodiment, and this prevents the leakage magnetic-flux from being shorted. As a result, this structure prevents, without fail, the motor from lowering its efficiency

(Example 6)

A permanent magnet synchronous motor in accordance with the sixth example is demonstrated hereinafter with reference to Fig. 10 through Fig. 12. The previous example 5 describes the example of forming cut-away section 14 corresponding to open space 11. In this example, as shown in Fig. 10(a) through Fig. 10(c), the outer wall of rotor core 5 forms a cylindrical face, and as Fig. 10(d) illustrates in detail, slit 16 is formed at the place where open space 11 would have been provided. Slit 16 can be hollow; however, it can be filled with resin or non-magnetic metal in order to maintain the strength of rotor 2.

Permanent magnets 6 shown in Fig. 10(a) have an even depth with regard to the arcs around the rotor center. Permanent magnets 6 shown in Fig. 10(b) have a flat face 13 on their inner wall facing the radial direction of the rotor, so that each magnet 6 has a greater depth at its center. Fig. 10(c) illustrates rotor 2 having four poles, where each permanent magnet 6 has an inner wall shaping an arc with regard to the rotor center and an outer wall shaping another arc with regard to a center eccentric from the rotor-core-center outwardly in the radial direction. This another arced face 15 is protruded and both end sections of face 15 taper into radial direction, so that both the end sections function as open spaces 11.

Permanent magnets 6 shown in Fig. 11 is modified from magnet 6 shown in Fig. 10(c) in this way: inner wall facing the radial direction forms an arced face 17 having the same eccentric center as arced face 15.

In this example, opening angle "Am" of slit 16 is set to meet this relation;

$$(1/10)As < Am < (1/4)As,$$

where "As" is an opening angle of tooth 4.
An opening angle of the space where slit 16 does not exist is set at about equal to the opening angle of tooth 4, i.e. within the range of (1.0 - 1.4)As.

This structure, i.e. cut-away section 14 is replaced with slit 16, produces the same effect as the example 5 does as illustrated in Fig. 9. When the opening angle "Am" of slit 16 is less than (1/10)As, the effect discussed above cannot be produced, and when "Am" is greater than (1/4)As, the motor produces lower output or greater cogging torque.

(Example 7)

A permanent magnet synchronous motor in accordance with the seventh example is demonstrated hereinafter with reference to Fig. 13 through Fig. 15. In this embodiment, permanent magnet 6 to be buried into rotor 2 has its curvature-center outside rotor 2 in radial direction, i.e. a reversely arced permanent magnet 18 is used as shown in Fig. 13. Magnet ends facing the outer rim of rotor 2 are situated inside the rotor with an appropriate distance from the outer rim, and slit 16 is formed in rotor core 5 so that each end of magnet 18 can face slit 16.

As shown in Fig. 14, the relation of $Lg<Q<3\ Lg$ is established,
where

Q = distance between the end of permanent magnet 18 and the outer rim of rotor core 5; and
Lg = air gap between stator 1 and rotor 2.

If Q is less than Lg, demagnetizing magnetic flux is not substantially blocked from traveling to permanent magnet 18. If Q is greater than 3 Lg, the magnetic field produced by magnet 18 is weakened, so that the motor produces lower output or greater cogging torque due to abrupt change of the magnetic field. An opening angle "Am" of slit 16 with regard to rotor center- angle "Am" being over an end of permanent magnet 18-is set to meet this relation;

$$(1/10)As < Am < (1/4)As$$

where "As" is an opening angle of tooth 4.

When the opening angle "Am" of slit 16 is less than (1/10)As, the effect discussed above cannot be produced, and when "Am" is greater than (1/4)As, the motor produces lower output or greater cogging torque.

(Example 8)

Motor 31 comprises stator 1, rotor 2 and permanent magnet 6 is disposed to rotor 2. The construction of motor 31 can be the same as those used in embodiments 1 and examples 1 through 7.

Motor 31 and compressor 32 are disposed in airtight container 33. Accumulator 35 is added to sucking pipe 34 of compressor 32, and discharging pipe 36 is disposed at an upper section of container 33. The compressor is thus made up. The compressor of the present invention is realized at a low cost and benefited from the advantages of the motor of the present invention because the advantages of motor 31 described in the previous embodiment and examples can be used.

Fig. 13 and Fig. 14 illustrate an example where slit 16 is formed within the outer rim of rotor core 5. Slit 16 can be replaced with cut-away section 19 as shown in Fig. 15. In this case, a size of cut-away section 19 is determined in the same manner as discussed above.

Fig. 16 illustrates examples of rotors, having interior-permanent-magnets other than the examples and embodiment discussed above. Fig. 16(a) and Fig. 16(b) illustrate the example modified from the example 7 regarding the opening angle and shape of slit 16. The example shown in Fig. 16(c) uses permanent magnet 6 made of plate-type magnet 6a. Fig. 16(d) illustrates permanent magnet 6 comprising reversely arced permanent magnets 18a and 18b disposed in multistage, parallel with each other, in the radial direction. Slits 16 are formed at respective ends of reversely arced permanent magnets 18a and 18b. Fig. 16(e) illustrates an example where permanent magnet 6 is formed of a pair of plate-type magnets 6b, the pair plates form an angle tapering outward in the radial direction. Fig. 16(f) illustrates an example where reversely arced permanent magnets 18 are used. Rotor core 5 comprises rotor core body 5a and rotor core cap 5b. Rotor core body 5a arranges magnets 18 to surround body 5a and forms star-like shape in cross sectional view. Rotor core cap 5b and body 5a hold magnet 18 in between. Hollow thin-cylinder 7 is fit to outer wall of rotor core 5 thereby maintaining the strength against centrifugal force. Slit 16 is formed at a place surrounded by the end of body 5a, end of cap 5b and cylinder 7.

The embodiment and examples previously discussed describe the permanent magnet synchronous motor in a sensor-less operation; however, those examples and the embodiment can be applied to the motor having a sensor with the same effect, i.e. demagnetization is restrained.

## Industrial Applicability

When the permanent magnets of the rotor are made of ferrite magnet-inexpensive than rare earth magnet and vulnerable to demagnetization-the structure discussed above can enhance the withstanding force of the inexpensive permanent magnets against the demagnetization. Therefore, an outstanding effect can be produced in this case. The stator formed by the divided cores realizes independent and efficient winding on respective divided cores before they are assembled into the stator. This can substantially increase the productivity and lower the cost. If this structure is applied to the motor driven by the sensor-less mechanism, an outstanding effect is expected because the sensor-less operation, in general, is vulnerable to demagnetization. In addition to the effects discussed above, when this permanent magnet synchronous motor is employed in compressors of air-conditioners or electric refrigerators, substantial effects are obtainable by lowering the costs of these appliances.

In the permanent magnet synchronous motor having a stator of the concentrated winding method and allowing its current-phase to be controlled in a sensor-less manner, the withstanding force against the demagnetization can be increased by the following method: Both ends of the permanent magnet buried inside the rotor along its rim are tapered at their outer wall toward inside in the radial direction and thus form recessed section. Therefore, when the coil counteracts the polarity of the rotor and then the adjacent teeth produce demagnetizing field between the teeth toward the rotor, the permanent magnet is not easily subjected to the demagnetizing field.

In that case, an opening angle of the recessed section with regard to the rotor center is referred to as "Am", and an opening angle of stator teeth is referred to as "As", then "Am" is set at greater than (1/10)As, thereby producing the same effect discussed above. When "Am" is set at less than (1/ 4)As, the motor is restrained from producing the lower output due to lower utilization factor of magnetic flux produced by the permanent magnet as well as from producing the greater cogging torque.

An inner face of the permanent magnet directing the radial direction forms a flat face so that the depth at the center of the magnet becomes greater. As a result, the withstanding force of the magnet center against the demagnetization further increases.

In the case that the permanent magnets are mounted on the outer wall of the rotor core, the recessed sections are formed at the place corresponding to respective open spaces which are produced by cutting away both the ends of the permanent magnet in the rim direction. This structure - can be realized through simple processes-allows the motor to increase the withstanding force against demagnetization, prevent the lower output and restraint cogging torque.

In the case that the rotor uses interior permanent magnets, i.e. the magnets are buried in the rotor core along its rim, cut-away sections or slits are formed at the place corresponding to both edges, of the permanent magnet. These cut-away sections or slits can thus prevent the leakage magnetic flux from traveling through a place of the rotor core made of ferromagnetic material, the place corresponding to the recessed section, and thus shorting of the place can be avoided. As a result, this structure allows the motor to avoid lowering the efficiency without fail.

In the case of the interior permanent magnets buried in the rotor core along its rim, and the magnet has its curvature center outside of the rotor in the radial direction and forms a reverse are, the same effect as discussed above is obtainable through the following method: Both the ends of the permanent magnet are situated inside of the rotor rim, where the ends of magnet face to the rotor rim, and cut-away sections or slits are formed on the rotor core at the place facing to those ends.

In that case, a distance between the end of permanent magnet and the outer rim of rotor is referred to as "Q", and an air-gap between stator and rotor is referred to as "Lg". "Q" is set at greater than "Lg" thereby obtaining the same effect discussed above without fail. "Q" is set at less than 3 Lg, thereby allowing the motor to avoid producing lower output or greater cogging torque produced by an abrupt change of the magnetic field. An opening angle "Am" over the cut-away section or the slit facing to one end of the permanent magnet with regard to the rotor center and an opening angle "As" of stator teeth are adjusted to meet the following relation: "Am" is set at greater than (1/10)As thereby obtaining the same effect discussed above without fail. "Am" is set at less than (1/4)As thereby allowing the motor to avoid producing lower output or greater cogging torque.

When these examples and the embodiment are applied to the motor in a sensor-less operation, the structure can be realized inexpensively and yet increase the withstanding force against the demagnetization, thus an outstanding effect is produced. When this permanent magnet synchronous motor is employed in compressors of air-conditioners or electric refrigerators, substantial effects are obtainable because the costs of these appliances can be lowered.

## Claims

1. A permanent magnet synchronous motor having a stator (1) with a concentrated winding, a rotor core (5) and a permanent magnet (6) mounted on an outer wall of said rotor core (5)
   **characterized in that**
   said permanent magnet (6) having an outer wall with respect to a radial direction of said rotor (2), and having an inwardly tapered section (11) at each end of said outer wall of said permanent magnet (6),
   wherein
   a relation of $(1/10)As < Am < (1/4)As$ is established, where
   "Am" is an angle of an arc length of said inwardly-tapered section at each end of said outer wall of said permanent magnet (6) measured with respect to a central axis of said rotor (2), and
   "As" is an angle of an arc length of each tooth (4) of said stator (1) measured with respect to said central axis of said rotor (2).

## Patentansprüche

1. Permanentmagnet-Synchronmotor, der einen Stator (1) mit einer konzentrierten Windung, ein Rotorblechpaket (5) und einen Permanentmagneten (6) hat, der an einer Außenwand des Rotorblechpaketes angebracht ist,

**dadurch gekennzeichnet, dass**
der Permanentmagnet (6) eine Außenwand im Bezug auf eine Radialrichtung des Rotors (2) hat und über einen nach innen abgeschrägten Abschnitt (11) an jedem Ende der Außenwand des Permanentmagneten (6) verfügt, wobei
eine Beziehung von (1/10)As < Am < (1/4)As gilt, bei der
"Am" ein Winkel einer Bogenlänge des nach innen abgeschrägten Abschnittes an jedem Ende der Außenwand des Dauermagneten (6) ist, gemessen im Bezug auf eine zentrale Achse des Rotors (2), und
"As" ein Winkel einer Bogenlänge jedes Zahns (4) des Stators (1), gemessen im Bezug auf die zentrale Achse des Rotors (2) ist.

## Revendications

**1.** Moteur synchrone à aimant permanent comportant un stator (1) avec un enroulement concentré, un noyau de rotor (5) et un aimant permanent (6) monté sur la paroi extérieure dudit noyau de rotor (5)
**caractérisé en ce que**
ledit aimant permanent (6) possède une paroi extérieure par rapport à la direction radiale dudit rotor (2) et comporte une section effilée vers l'intérieur (11) à chaque extrémité de ladite paroi extérieure dudit aimant permanent (6), dans lequel
la relation (1/10)As < Am < (1/4)As est établie, où
« Am » est l'angle de la longueur d'arc de ladite section effilée vers l'intérieur à chaque extrémité de ladite paroi extérieure dudit aimant permanent (6), mesuré par rapport à l'axe central dudit rotor (2), et
« As » est l'angle de la longueur d'arc de chaque dent (4) dudit stator (1,) mesuré par rapport audit axe central dudit rotor (2).

FIG. 1

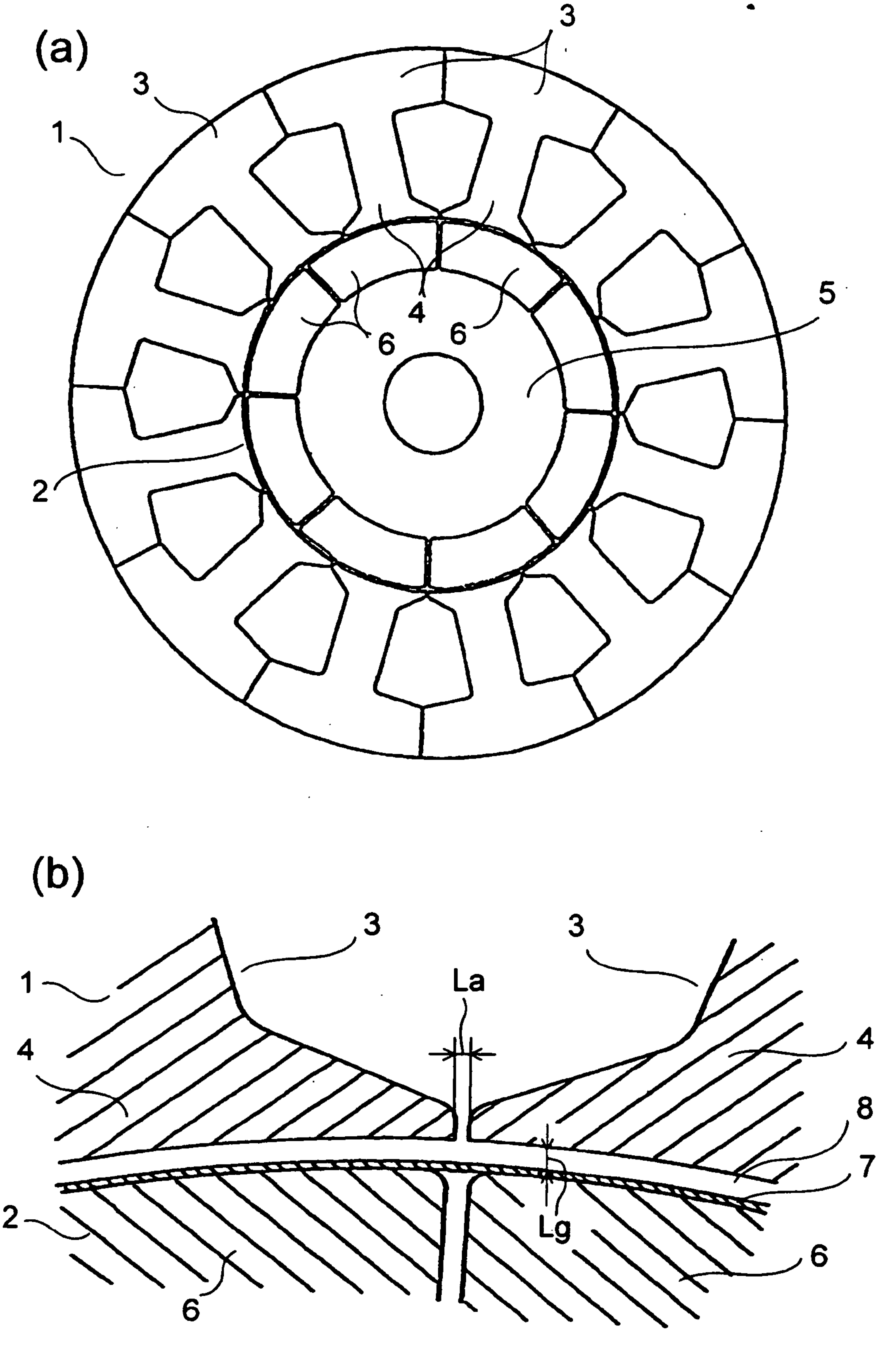

FIG. 2

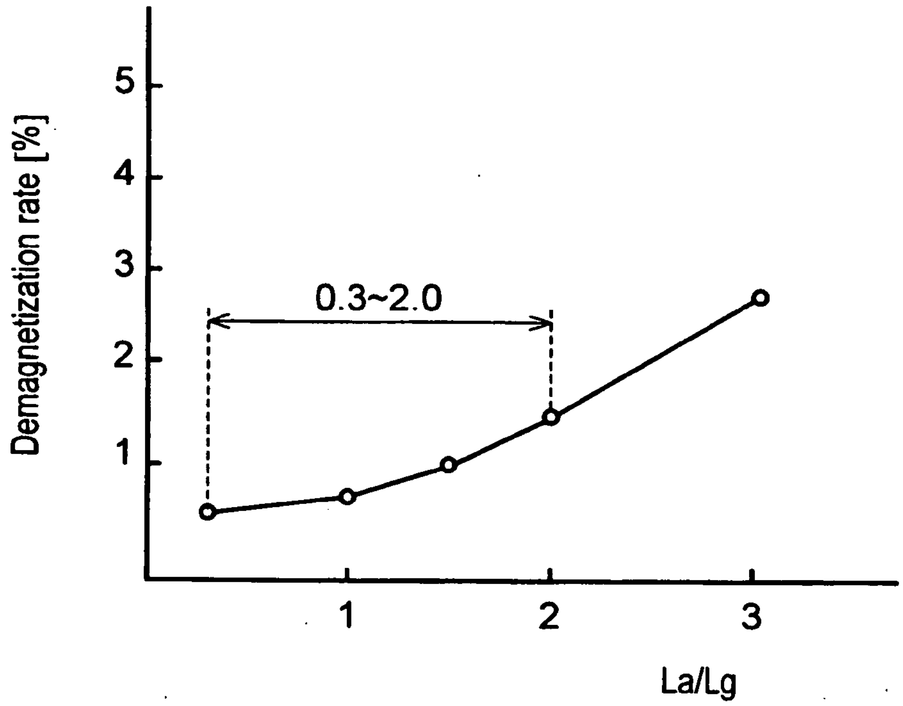
Demagnetization rate [%]
5
4
3
2
1
0.3~2.0
1
2
3
La/Lg

FIG. 3

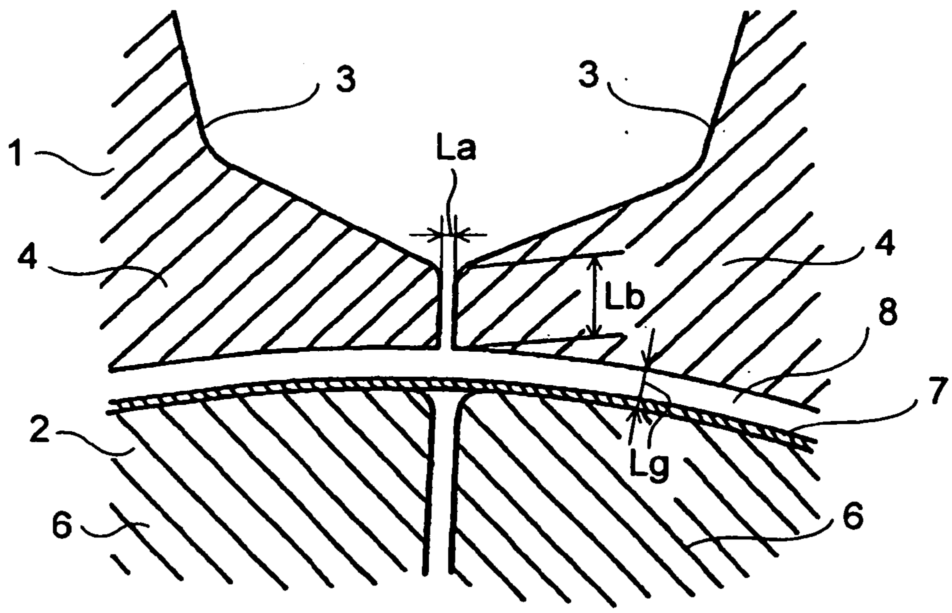
1
3
3
La
4
4
Lb
8
7
2
Lg
6
6

FIG. 4

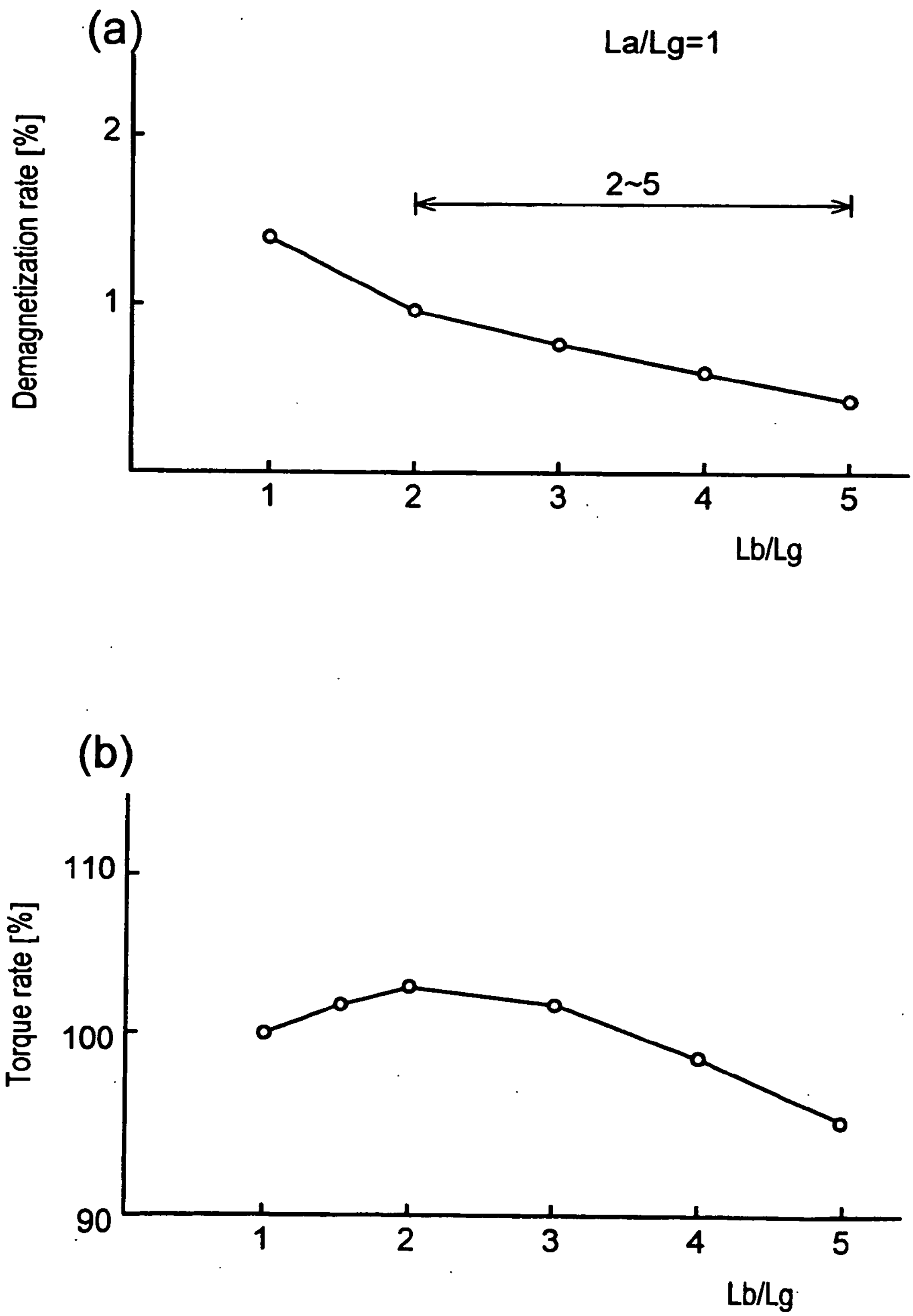
(a)
La/Lg=1
Demagnetization rate [%]
2
1
2~5
1
2
3
4
5
Lb/Lg
(b)
Torque rate [%]
110
100
90
1
2
3
4
5
Lb/Lg

FIG. 5

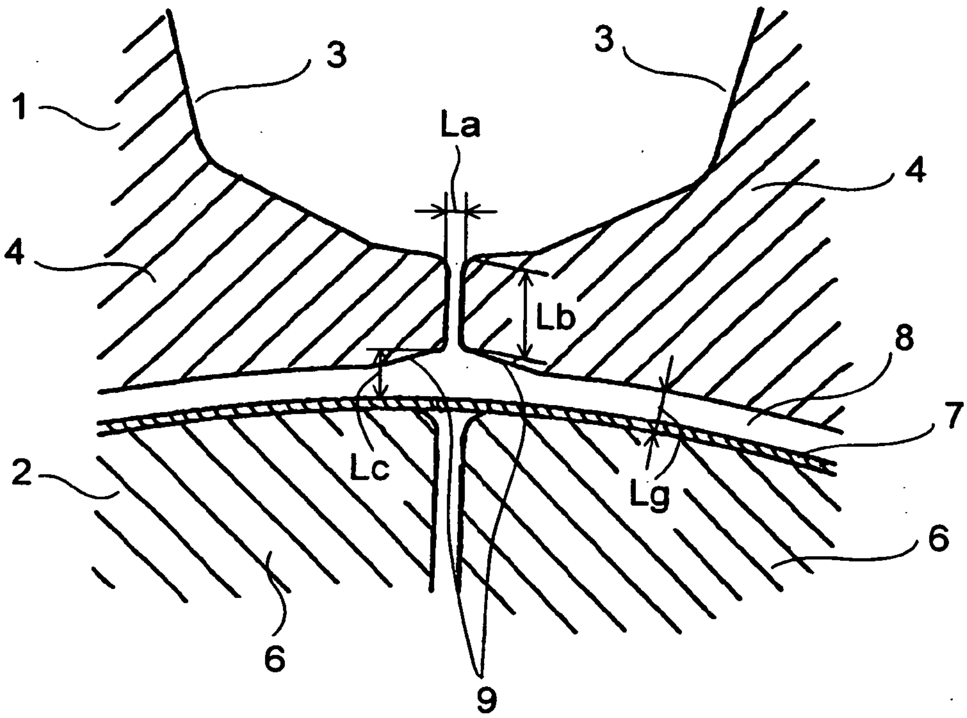

FIG. 6

(a)

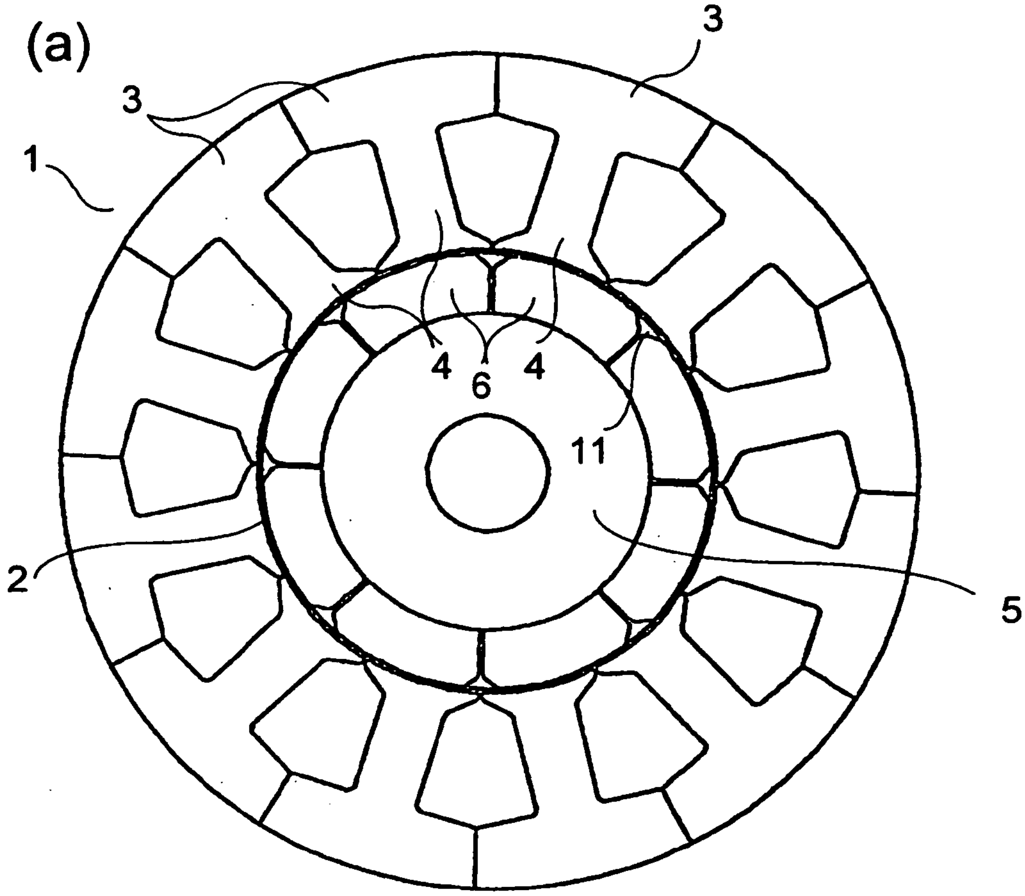


(b)

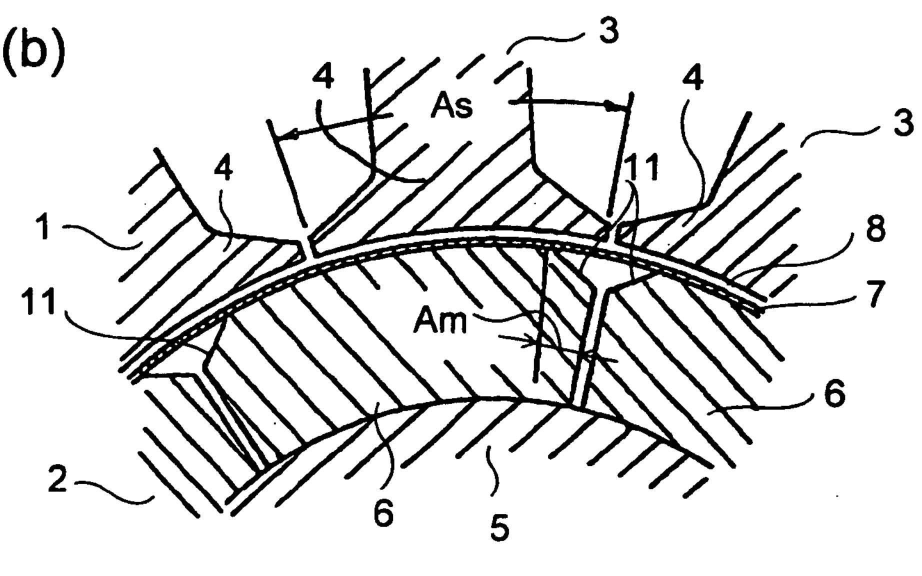

FIG. 7

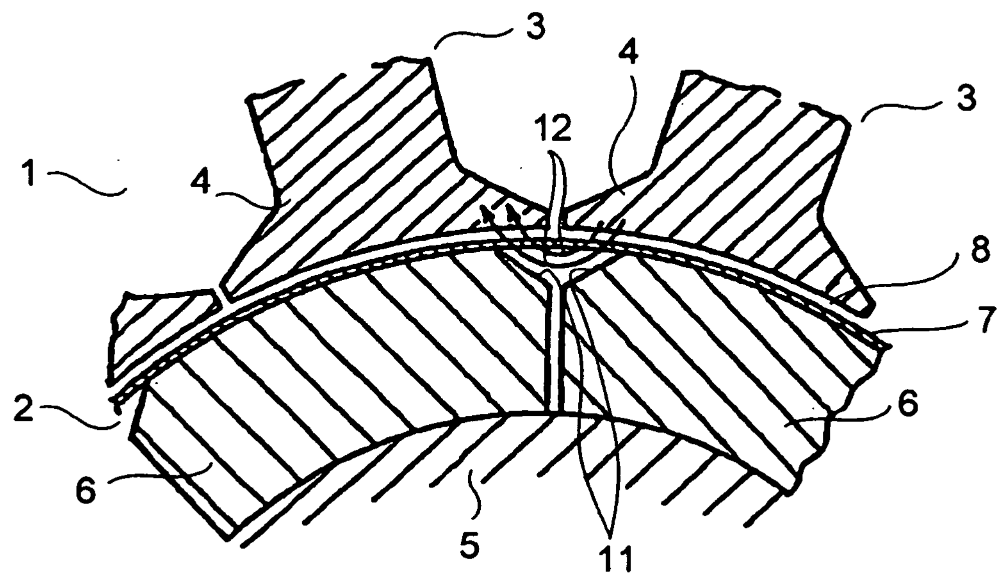


FIG. 8

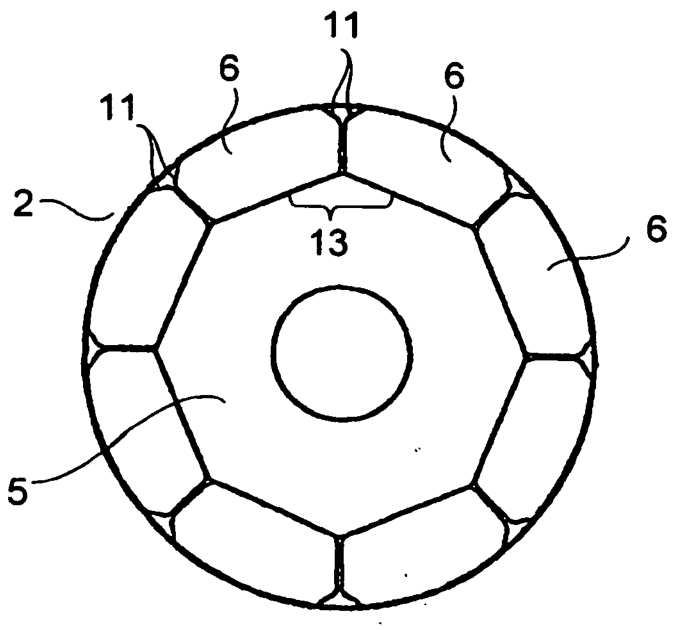

FIG. 9

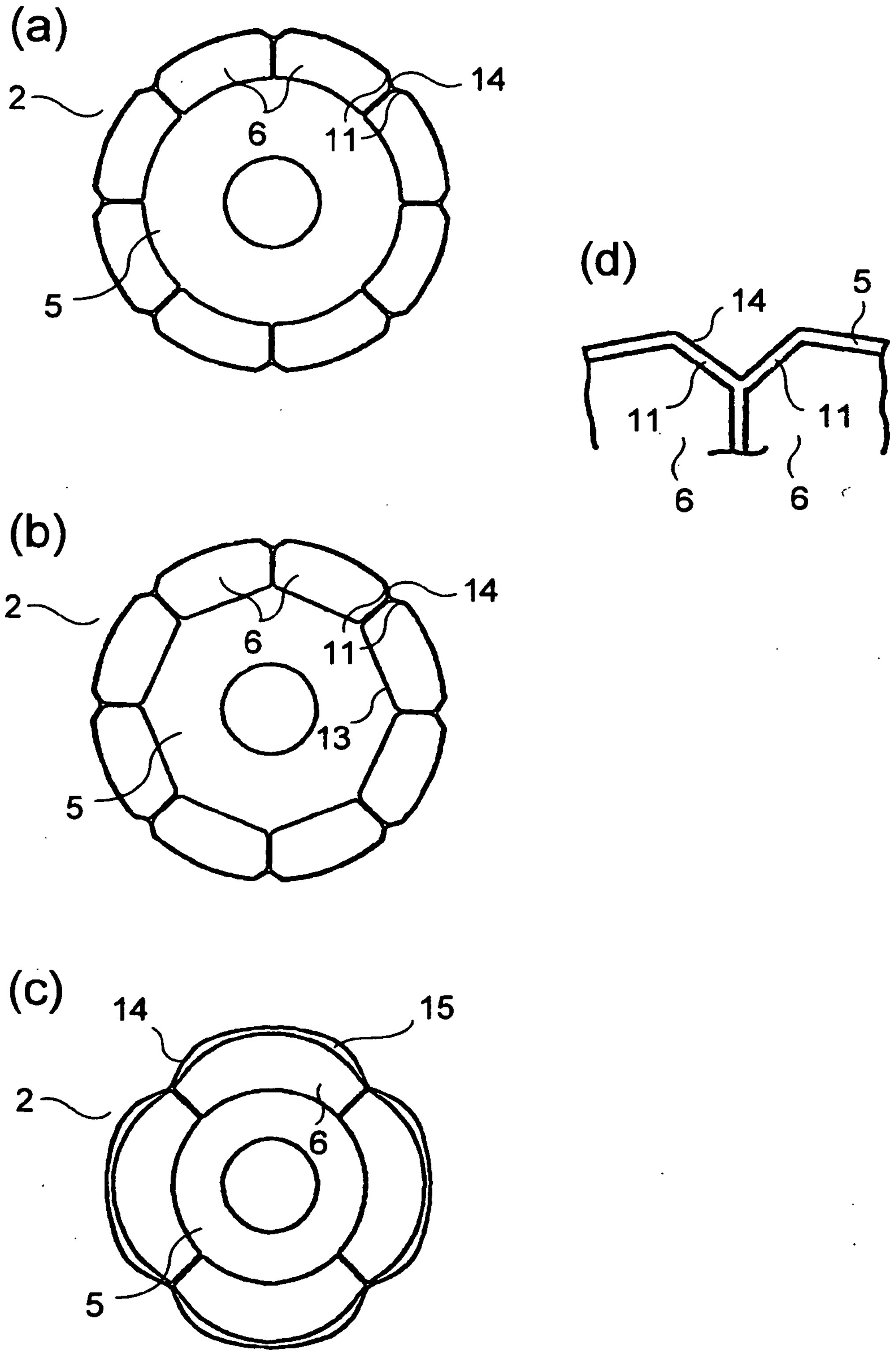

FIG. 10

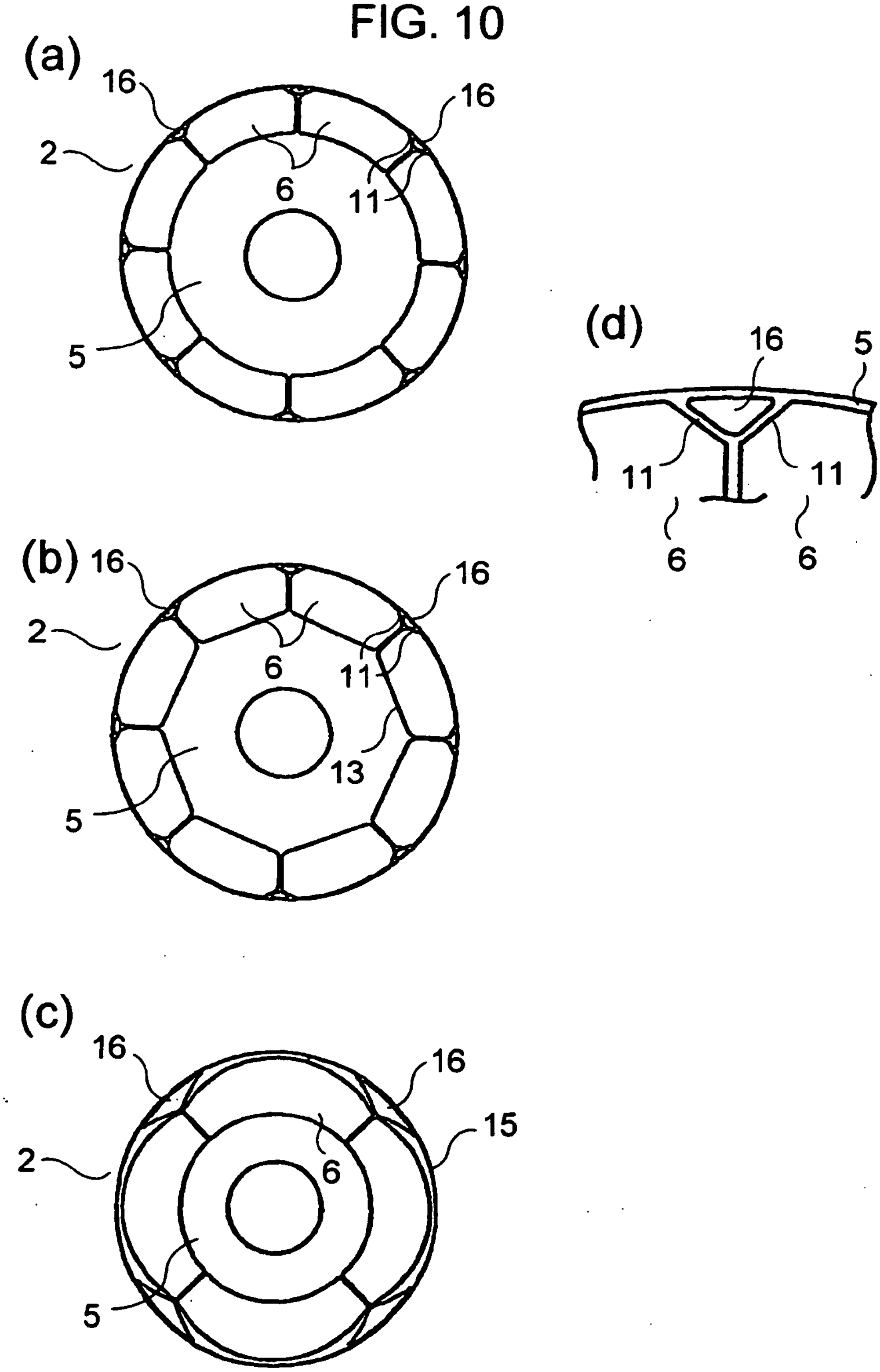

FIG. 11

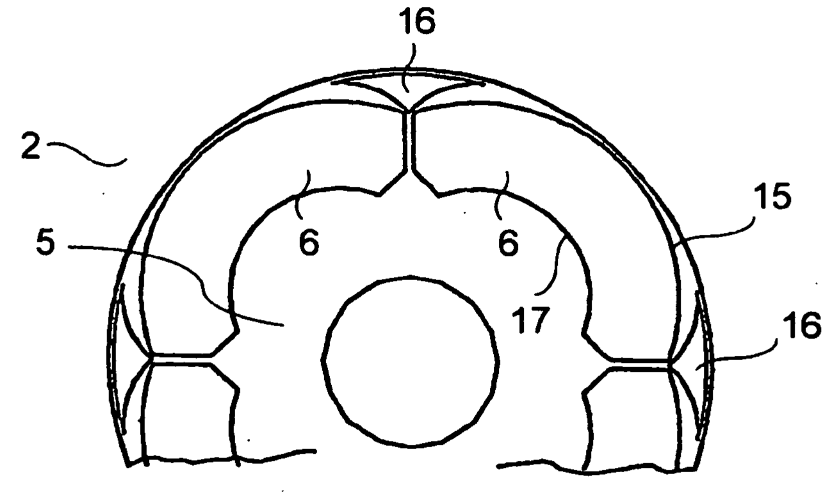


FIG. 12

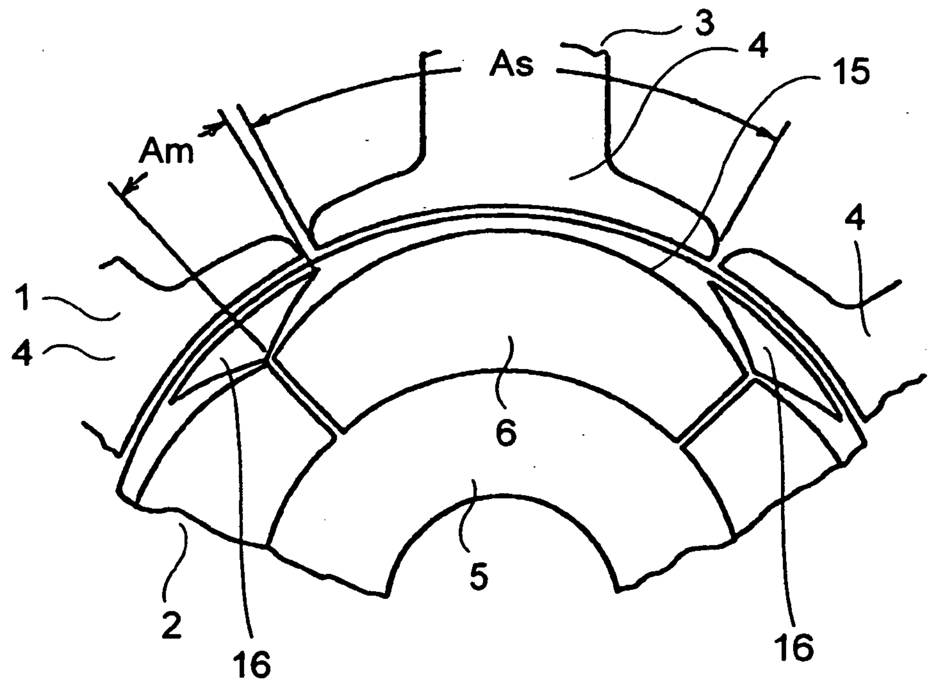

FIG. 13

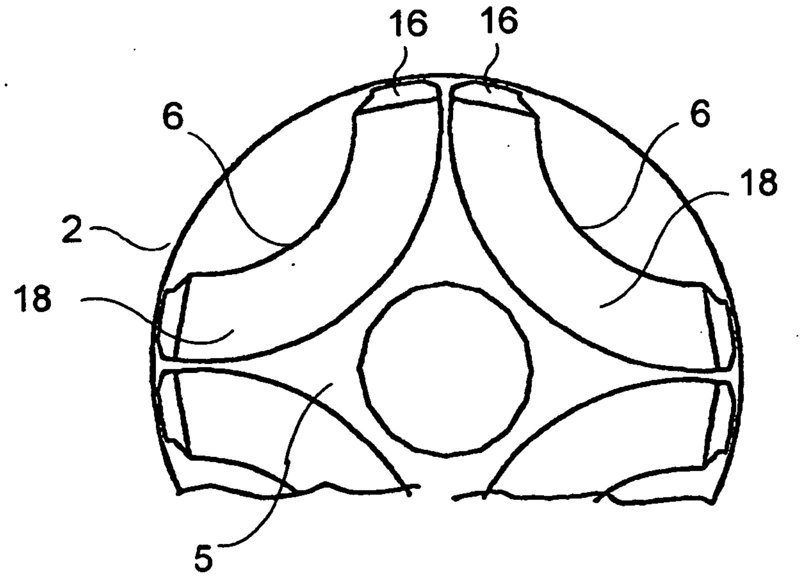


FIG. 14

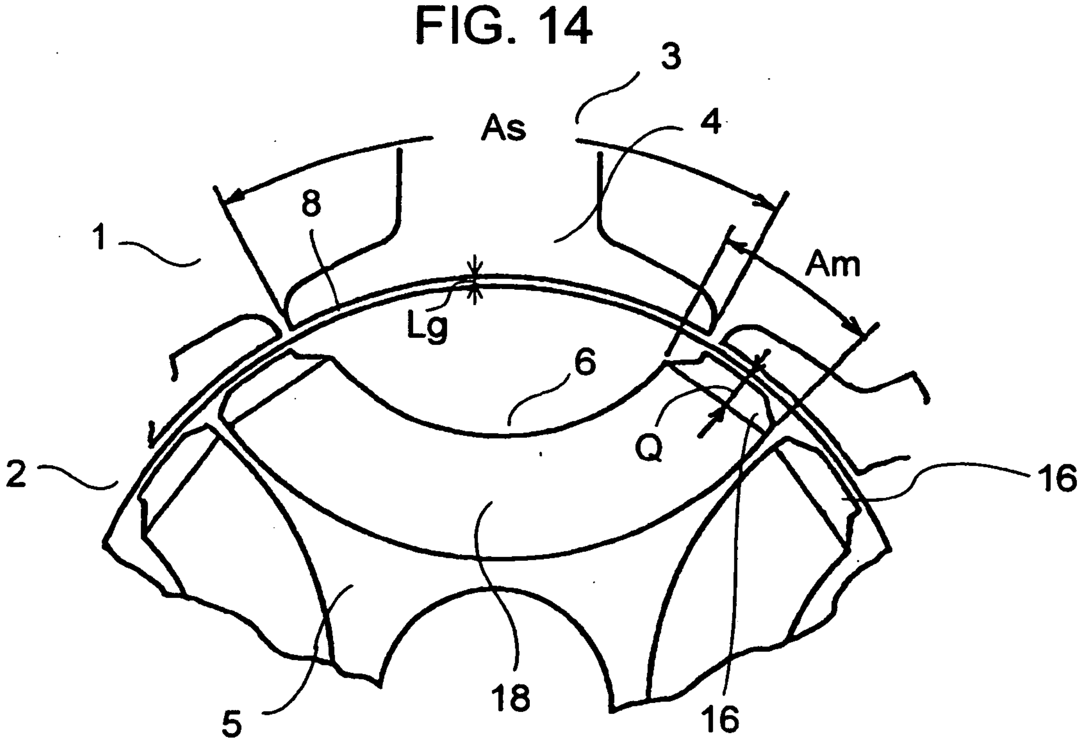

FIG. 15

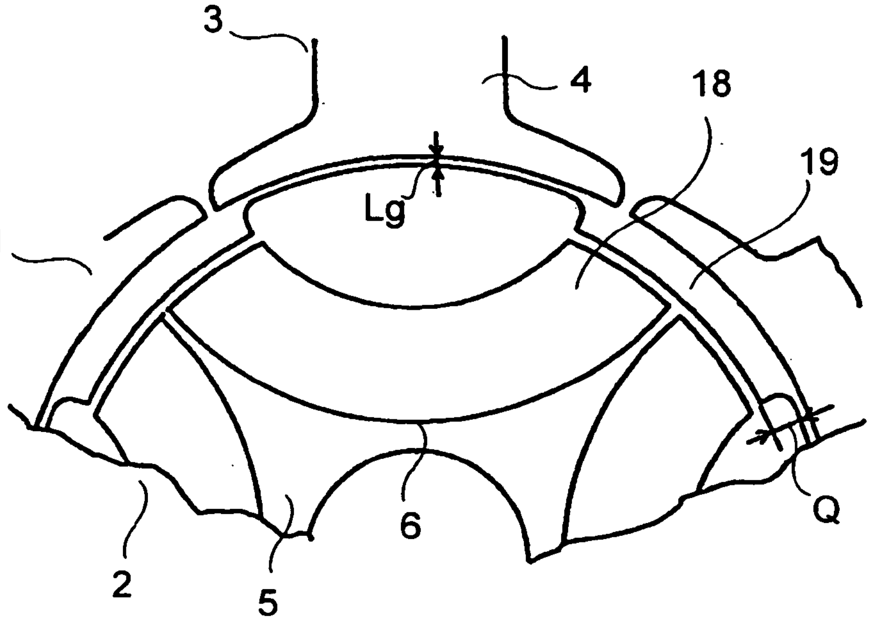

FIG. 16

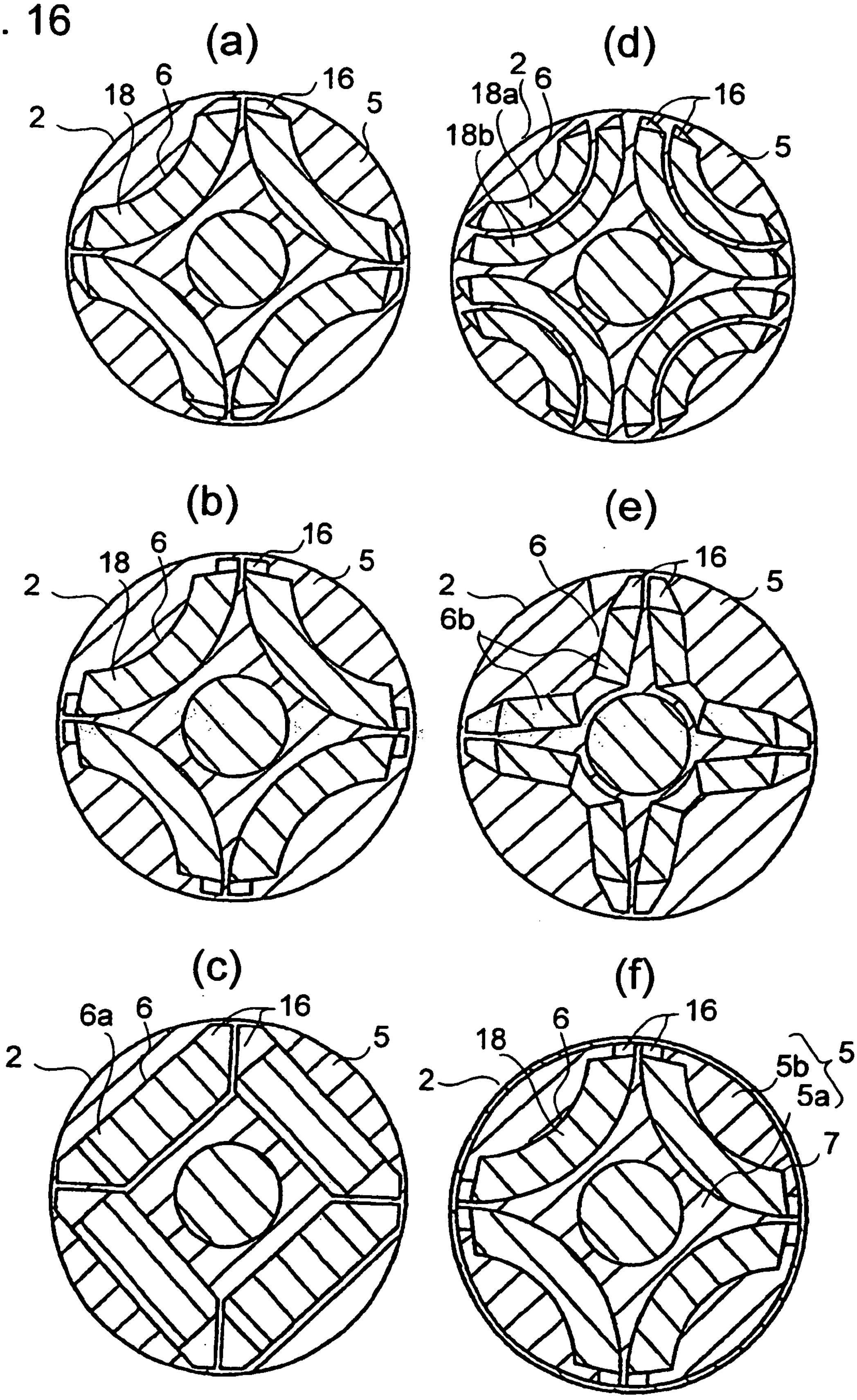
(a)
2
18
6
16
5
(d)
2
18a
6
18b
16
5
(b)
2
18
6
16
5
(e)
2
6
6b
16
5
(c)
2
6a
6
16
5
(f)
2
18
6
16
5b
5a
5
7

FIG. 17

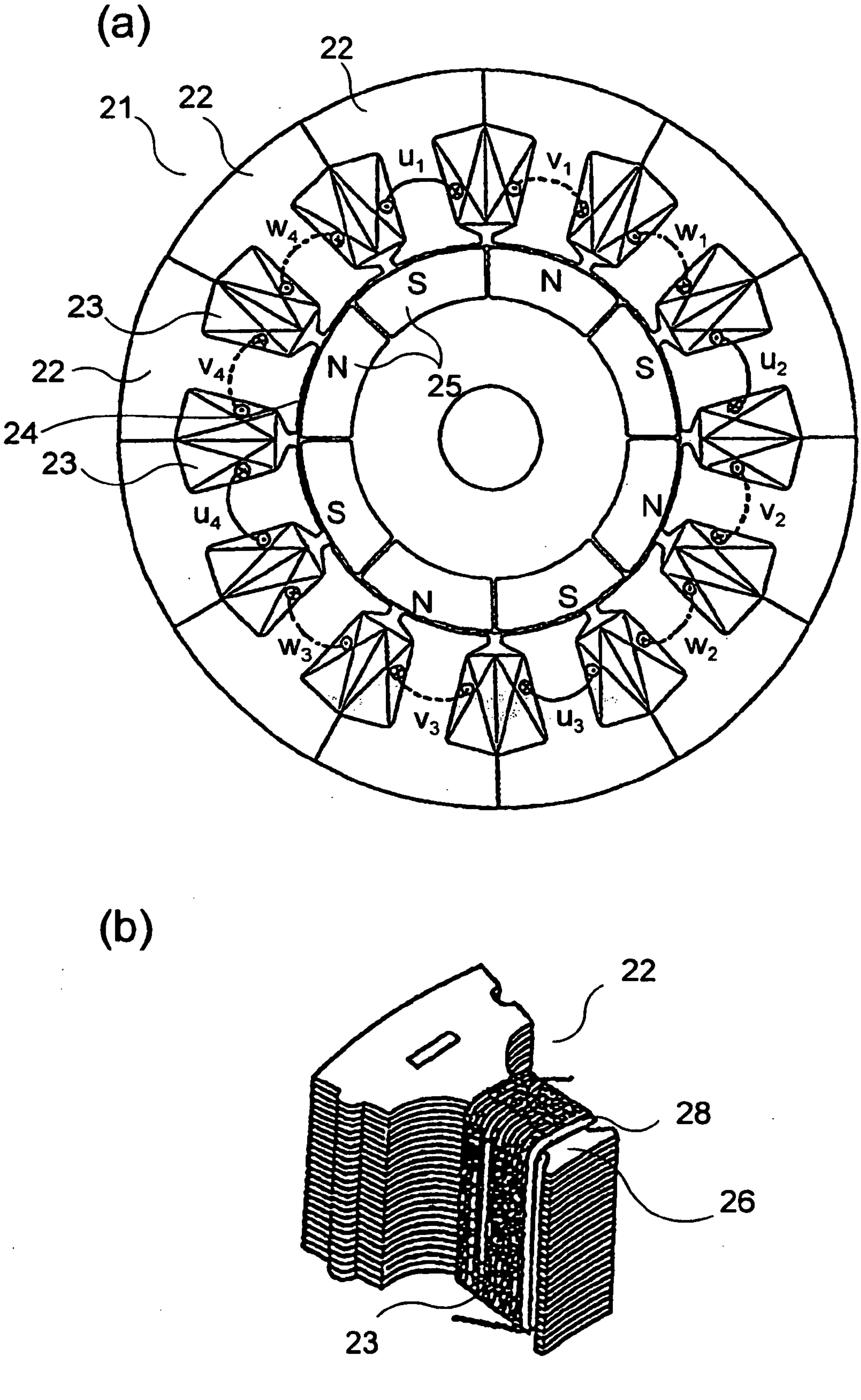
(a)
22
21
22
u1
v1
w4
w1
S
N
23
N
S
u2
22
v4
25
24
23
S
N
u4
v2
N
S
w3
w2
v3
u3
(b)
22
28
26
23

FIG. 18

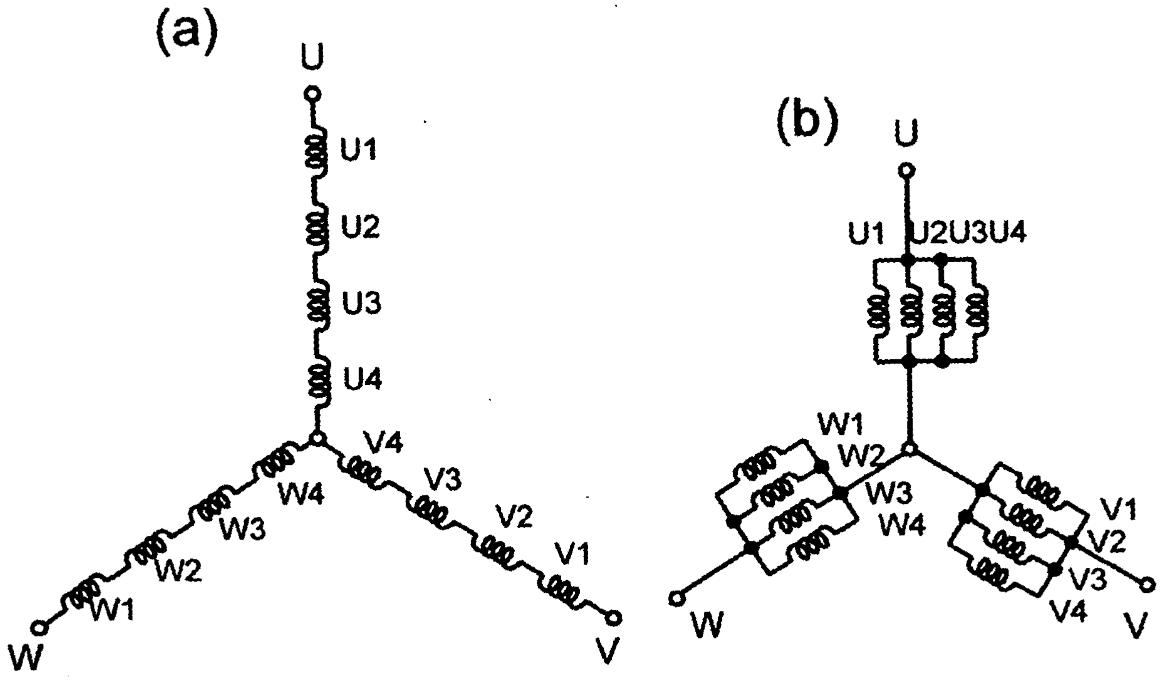
(a)
U
U1
U2
U3
U4
V4
V3
V2
V1
V
W4
W3
W2
W1
W
(b)
U
U1
U2U3U4
W1
W2
W3
W4
W
V1
V2
V3
V4
V

FIG. 19

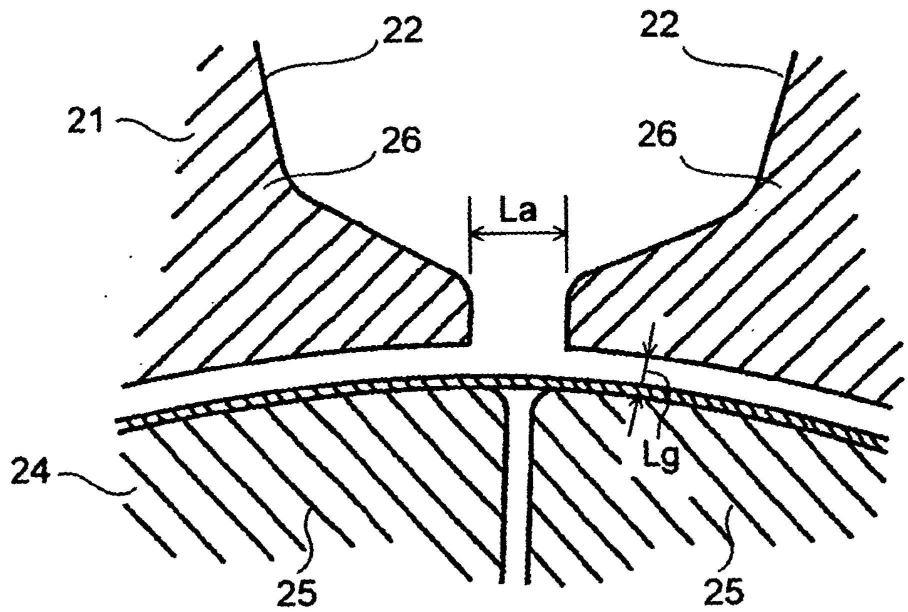
22
22
21
26
26
La
Lg
24
25
25

FIG. 20

(a)

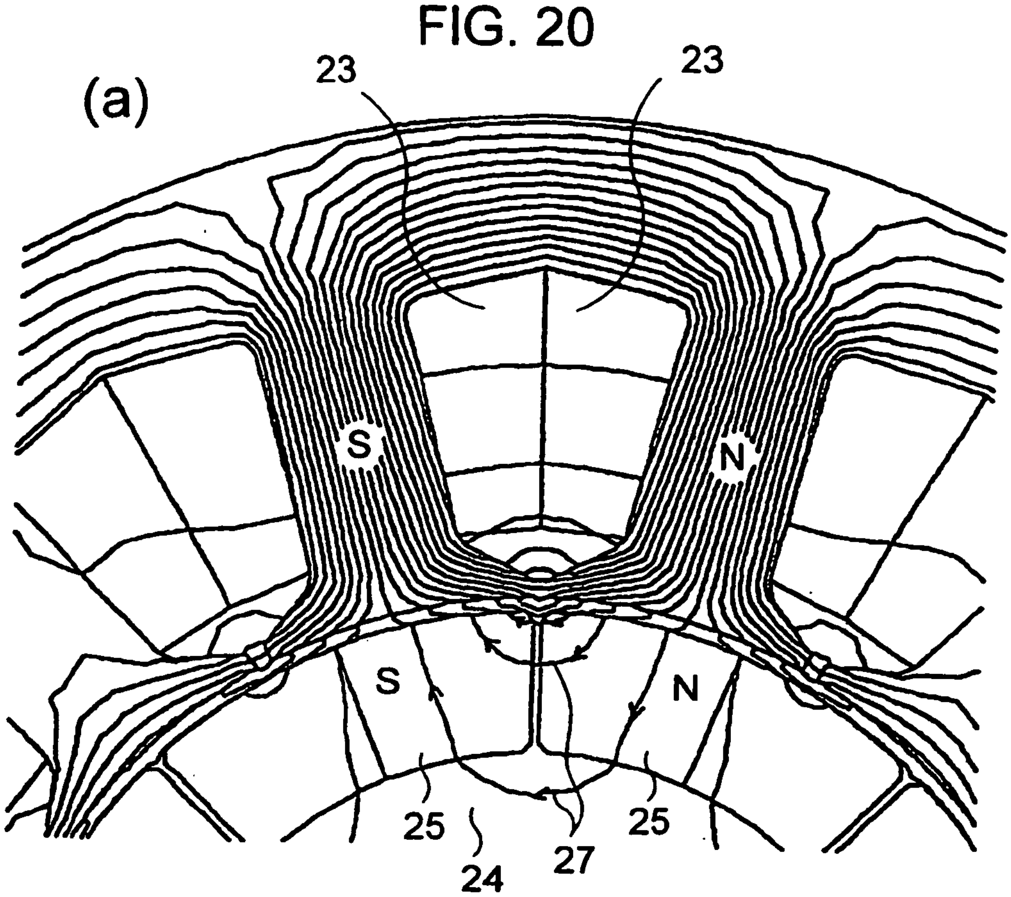


(b)

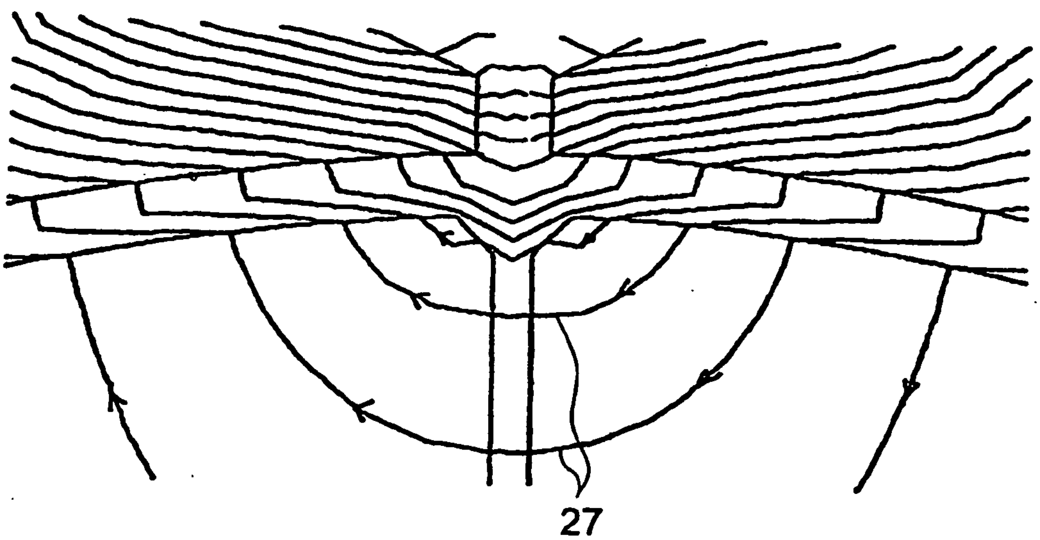

FIG. 21

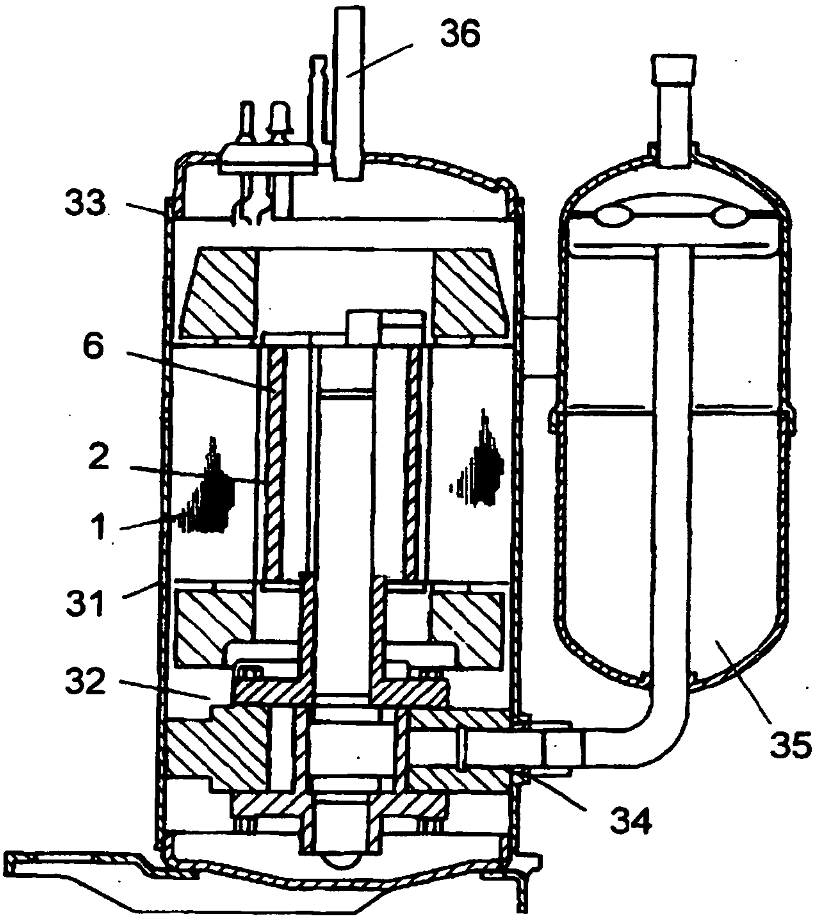

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 06217478 A
- EP 0695018 A